# EUROPÄISCHE PATENTSCHRIFT

(11) **EP 3 301 343 B1**
(45) Veröffentlichungstag und Bekanntmachung des Hinweises auf die Patenterteilung: **29.07.2020**
(21) Anmeldenummer: 17187551.1
(22) Anmeldetag: 23.08.2017
(51) Int. Cl.: F16L 47/02, B29C 65/00, B29C 65/06

(54) **FLUIDVERBINDER**
FLUID CONNECTOR
CONNECTEUR DE FLUIDE

(30) Priorität: 30.09.2016 DE 102016118578
(43) Veröffentlichungstag der Anmeldung: 04.04.2018
(73) Patentinhaber: VERITAS AG, 63571 Gelnhausen (DE)
(72) Erfinder: Zinkand, Mathias, 63628 Bad Soden-Salmünster (DE); Höfer, Tobias, 63571 Gelnhausen-Höchst (DE); Stuwe, Marc, 63571 Gelnhausen (DE)
(74) Vertreter: Patentship Patentanwaltsgesellschaft mbH

(56) Entgegenhaltungen:
- WO-A2-02/02978
- DE-A1-102006 017 170
- US-A- 4 784 409
- US-A1- 2008 012 309

## Beschreibung

Die vorliegende Erfindung betrifft einen Fluidverbinder, insbesondere einen Fluidverbinder zum fluidtechnischen Verbinden von fluidführenden Bauteilen, wie z.B. fluidführenden Leitungen in einem Kraftfahrzeug.

In einem Kraftfahrzeug kommt eine Vielzahl von fluidführenden Leitungen, insbesondere flüssigkeitsführende oder gasführende Leitungen, in Form von Schläuchen, Rohren und dergleichen zum Einsatz, wie beispielsweise eine Leitung zum Leiten von Getriebeöl, um ein Getriebe eines Kraftfahrzeugs mit Getriebeöl zu versorgen. Um die fluidführenden Leitungen mit verschiedenen Bauteilen, bzw. Aggregaten, im Kraftfahrzeug zu verbinden, werden Verbindungskörper verwendet, welche oftmals mittels eines Reibschweißverfahrens, insbesondere Rotationsreibschweißverfahrens, mit den entsprechenden fluidführenden Leitungen verbunden werden. Während des Reibschweißens wird durch die Rotation der fluidführenden Leitung innerhalb des Verbindungskörpers Wärme erzeugt, wodurch die fluidführende Leitung zumindest partiell aufschmilzt und nach dem Abkühlen durch die Reibschmelze eine stoffschlüssige Verbindung zwischen der fluidführenden Leitung und dem Verbindungskörper sichergestellt werden kann. Um ein Austreten von Fluid zu verhindern, muss sichergestellt werden, dass die Reibschweißverbindung auch bei einer hohen thermischen Belastung und Druckbelastung eine ausreichende Stabilität aufweist und ausreichend fluiddicht ist, und dass beim Reibschweißen keine Verunreinigungen in die fluidführende Leitung dringen.

Die Druckschrift WO 02/02978 A1 beschreibt einen mittels einer Reibschweißverbindung mit einem Kunststoff-beschichteten Metallrohr verbundenen Verbinder.

Die Druckschrift US 4,784,409 beschreibt eine Reibschweißverbindung zwischen einem Rohr und einer Buchse.

Die Druckschrift DE 10 2006 017 170 A1 beschreibt ein Fluidleitungsverbindungsteil für eine Reibschweißverbindung mit Fluidleitungen.

Es ist die der Erfindung zugrundeliegende Aufgabe, einen Fluidverbinder bereitzustellen, durch welchen fluidführende Leitungen durch Reibschweißen wirksam miteinander verbunden werden, wobei die Reibschweißverbindung eine ausreichende Stabilität und Dichtigkeit aufweist, und eine reduzierte Menge von Verunreinigungen entsteht.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Fluidverbinder gelöst, mit einem hülsenförmigen Anschlussstutzen mit einer Stutzeninnenwandung und einem im Inneren des hülsenförmigen Anschlussstutzens gebildeten ringförmigen Anschlagkragen, der eine axial gerichtete Anschlagfläche aufweist, und einem Kunststoffrohr, das eine Rohrinnenwandung, eine Rohraußenwandung und eine Rohrstirnseite aufweist, wobei die Rohrstirnseite des Kunststoffrohrs die axial gerichtete Anschlagfläche kontaktiert, und wobei die Rohraußenwandung des Kunststoffrohrs mit der Stutzeninnenwandung des hülsenförmigen Anschlussstutzens mittels einer Reibschweißverbindung verbunden ist.

Durch die Reibschweißverbindung zwischen der Rohraußenwandung des Kunststoffrohrs und der Stutzeninnenwandung des hülsenförmigen Anschlussstutzens kann eine besonders wirksame Befestigung des Kunststoffrohrs in dem hülsenförmigen Anschlussstutzen sichergestellt werden.

In einem Kraftfahrzeug kommt eine Vielzahl von fluidführenden Leitungen, insbesondere flüssigkeitsführende oder gasführende Leitungen, in Form von Schläuchen, Rohren und dergleichen zum Einsatz, wie beispielsweise eine Leitung zum Leiten von Getriebeöl, um ein Getriebe eines Kraftfahrzeugs mit Getriebeöl zu versorgen. Hierbei werden die fluidführenden Leitungen, insbesondere das Kunststoffrohr, mit Verbindungskörpern, insbesondere Fluidverbindern, verbunden, um eine wirksame fluidtechnische Verbindung zwischen den fluidführenden Leitungen und den angeschlossenen Bauteilen des Kraftfahrzeuges sicherzustellen. Eine wirksame stoffschlüssige Verbindung zwischen fluidführenden Leitungen und Verbindungskörpern kann durch eine Reibschweißverbindung sichergestellt werden.

In dem erfindungsgemäßen Fluidverbinder kontaktiert die Rohrstirnseite des Kunststoffrohrs die axial gerichtete Anschlagsfläche des ringförmigen Anschlagskragens des hülsenförmigen Anschlussstutzens. Bei einer anschließenden Rotation des Kunststoffrohrs innerhalb des hülsenförmigen Anschlussstutzens schmilzt der Kunststoff des Kunststoffrohrs zumindest partiell, wodurch sich nach dem Abkühlen des Fluidverbinders und Abkühlen der gebildeten Reibschmelze eine wirksame Reibschweißverbindung zwischen der Rohraußenwandung des Kunststoffrohrs und der Stutzeninnenwandung des hülsenförmigen Anschlussstutzens ergibt.

Die gebildete Reibschweißverbindung stellt eine wirksame Stabilität und fluidtechnische Dichtigkeit der Verbindung zwischen dem Kunststoffrohr und dem hülsenförmigen Anschlussstutzen bei Druckbelastung und bei thermischer Belastung sicher. Zudem wird eine strömungstechnisch optimierte Ausführung des Übergangs zwischen Kunststoffrohr und dem hülsenförmigen Anschlussstutzen sichergestellt. Ferner wird beim Reibschweißverfahren sichergestellt, dass eine möglichst geringe Menge von Verunreinigungen, wie z.B. Kunststoffspänen entsteht, bzw. keine Reibschmelze unkontrolliert austritt.

In der erfingungsgemäßen Ausführungsform des Fluidverbinders ist zwischen dem ringförmigen Anschlagkragen und der Stutzeninnenwandung des hülsenförmigen Anschlussstutzens eine umlaufende Rille oder Tasche für die Aufnahme von Reibschmelze gebildet. Dadurch wird der technische Vorteil erreicht, dass die umlaufende Rille oder Tasche ausgebildet ist, während des Reibschweißvorgangs entstehende Reibschmelze wirksam aufzunehmen, wodurch ein unkontrolliertes Austreten von Reibschmelze aus dem Fluidverbinder, bzw. in das Kunststoffrohr, verhindert werden kann.

In einer weiteren vorteilhaften Ausführungsform des Fluidverbinders weist der hülsenförmige Anschlussstutzen ein Einführende auf, an welchem das Kunststoffrohr eingeführt ist, und ist in der Stutzeninnenwandung des hülsenförmigen Anschlussstutzens zwischen dem ringförmigen Anschlagkragen und dem Einführende eine umlaufende Vertiefung oder Konturierung, insbesondere eine Eindellung oder ein Wellental, für die Aufnahme rückströmender Reibschmelze gebildet.

Dadurch wird der technische Vorteil erreicht, dass die umlaufende Vertiefung oder Konturierung sicherstellt, dass während des Reibschweißvorgangs entstehende Reibschmelze wirksam aufgenommen wird. Während des Reibschweißvorgangs entstehende Reibschmelze kann zwischen der Rohraußenseite des Kunststoffrohrs und der Stutzeninnenwandung des hülsenförmigen Anschlussstutzens zurückströmen. Somit verhindert die umlaufende Vertiefung oder Konturierung, dass rückströmende Reibschmelze unkontrolliert aus dem Fluidverbinder, bzw. in das Kunststoffrohr, austreten kann.

In einer weiteren vorteilhaften Ausführungsform des Fluidverbinders ist in der Stutzeninnenwandung des hülsenförmigen Anschlussstutzens zwischen der umlaufenden Vertiefung oder Konturierung und dem Einführende ein Übergangsbereich gebildet.

Dadurch wird der technische Vorteil erreicht, dass der Übergangsbereich eine ausreichende Beabstandung zwischen der umlaufenden Vertiefung oder Konturierung und dem Einführende bereitstellt, wodurch eine wirksame Aufnahme von zurückströmender Reibschmelze in der umlaufenden Vertiefung oder Konturierung sichergestellt wird.

In einer weiteren vorteilhaften Ausführungsform des Fluidverbinders ist in der Stutzeninnenwandung zwischen dem ringförmigen Anschlagkragen und der umlaufenden Vertiefung oder Konturierung ein Schweißbereich der Stutzeninnenwandung gebildet, wobei die Rohraußenwandung des Kunststoffrohrs mit dem Schweißbereich der Stutzeninnenwandung mittels der Reibschweißverbindung verbunden ist.

Dadurch wird der technische Vorteil erreicht, dass der Schweißbereich zwischen dem ringförmigen Anschlagkragen und der umlaufenden Vertiefung oder Konturierung vorteilhaft innerhalb der Stutzeninnenwandung angeordnet ist. Somit kann bei Ausbilden der Reibschweißverbindung an dem Schweißbereich sichergestellt werden, dass die während des Reinschweißens entstehende und rückströmende Reibschmelze wirksam in der Vertiefung oder Konturierung aufgenommen werden kann, und dass in Richtung des ringförmigen Anschlagkragens strömende Reibschmelze wirksam an dem ringförmigen Anschlagkragen, insbesondere innerhalb einer Rille oder Tasche an dem ringförmigen Anschlagkragen, aufgenommen werden kann.

In einer weiteren vorteilhaften Ausführungsform des Fluidverbinders weist der Schweißbereich eine sich entlang der Längsrichtung des hülsenförmigen Anschlussstutzens erstreckende konturlose Oberfläche auf, oder weist der Schweißbereich eine Erhöhung auf.

Dadurch wird der technische Vorteil erreicht, dass durch die unterschiedlichen Ausgestaltungen des Schweißbereichs, je nach Art der Reibschweißverbindung und der zu verschweißenden Körper eine besonders vorteilhaft optimierte Reibschweißverbindung bereitgestellt werden kann. Wenn der Schweißbereich entlang der Längsrichtung des hülsenförmigen Anschlussstutzens eine konturlose Oberfläche aufweist, kann das Kunststoffrohr besonders einfach und ohne großen Widerstand in den hülsenförmigen Anschlussstutzen eingeführt werden, und eine Reibschweißverbindung bereitgestellt werden. Wenn der Schweißbereich eine Erhöhung aufweist, ergibt sich beim Einführen des Kunststoffrohres zwar ein höherer Widerstand, gleichzeitig kann aber durch die Erhöhung eine an dem ringförmigen Anschlagkragen gebildete Rille oder Tasche vergrößert werden, wodurch das Volumen der Rille oder Tasche zur Aufnahme von Reibschmelze vergrößert werden kann.

In einer weiteren vorteilhaften Ausführungsform des Fluidverbinders weist der hülsenförmige Anschlussstutzen ein Einführende auf, an welchem das Kunststoffrohr eingeführt ist, und ist in der Stutzeninnenwandung des hülsenförmigen Anschlussstutzens zwischen dem ringförmigen Anschlagkragen und dem Einführende eine umlaufende wellenförmige Verformung mit einem Wellenberg und einem Wellental für die Aufnahme rückströmender Reibschmelze gebildet.

Dadurch wird der technische Vorteil erreicht, dass die umlaufende wellenförmige Verformung der Stutzeninnenwandung des hülsenförmigen Anschlussstutzens mit einem Wellenberg und einem Wellental eine besonders vorteilhafte Reibschweißverbindung zwischen dem Kunststoffrohr und dem hülsenförmigen Anschlussstutzen ermöglicht. Zwischen dem Wellenberg und dem ringförmigen Anschlagkragen kann der Bereich zur Aufnahme von entstehender Reibschmelze vergrößert werden und in dem Wellental kann zurückströmende Reibschmelze wirksam aufgenommen werden.

In einer weiteren vorteilhaften Ausführungsform des Fluidverbinders bildet die Rohrinnenwandung des Kunststoffrohrs eine Innenwandung des Fluidverbinders, welche sich von der Anschlagfläche bis zu einem Einführende des hülsenförmigen Anschlussstutzens erstreckt.

Dadurch wird der technische Vorteil erreicht, dass durch den Kontakt zwischen der Anschlagfläche des ringförmigen Anschlagkragens mit der Rohrstirnseite des Kunststoffrohres eine durchgehende Innenwandung des Fluidverbinders sichergestellt wird. Somit wird gewährleistet, dass an dem Übergang zwischen der Anschlagfläche und der Rohrstirnseite keine Hinterschneidungen auftreten und somit ein optimales strömungstechnisches Verhalten innerhalb des Fluidverbinders sichergestellt werden kann.

In einer weiteren vorteilhaften Ausführungsform des Fluidverbinders weist der hülsenförmige Anschlussstutzen eine weitere Stutzeninnenwandung auf, welche zwischen dem ringförmigen Anschlagkragen und einem dem Kunststoffrohr abgewandten Bereich des hülsenförmigen Anschlussstutzens gebildet ist, wobei der ringförmige Anschlagkragen an einer dem Inneren des hülsenförmigen Anschlussstutzens zugewandten Seite eine Krageninnenwandung aufweist, und wobei die weitere Stutzeninnenwandung und die Krageninnenwandung eine weitere Innenwandung des Fluidverbinders bilden, welche sich von dem dem Kunststoffrohr abgewandten Bereich bis zu dem ringförmigen Anschlagkragen des hülsenförmigen Anschlussstutzens erstreckt.

Dadurch wird der technische Vorteil erreicht, dass durch die weitere Innenwandung und die Innenwandung des Fluidverbinders, welche die Stutzeninnenwandung, die Krageninnenwandung und die Rohrinnenwandung umfasst, sichergestellt werden kann, dass innerhalb des Fluidverbinders eine durchgehende Strömungsfläche ohne Hinterschneidungen gebildet wird, welche ein wirksames strömungsoptimiertes Leiten von Fluid innerhalb des Fluidverbinders ermöglicht.

In einer weiteren vorteilhaften Ausführungsform des Fluidverbinders weist der hülsenförmige Anschlussstutzen ein abgerundetes Einführende auf.

Dadurch wird der technische Vorteil erreicht, dass durch das abgerundete Einführende Kunststoffrohre mit unterschiedlichen Durchmessern vorteilhaft in das Innere des hülsenförmigen Anschlussstutzens eingeführt werden können.

In einer weiteren vorteilhaften Ausführungsform des Fluidverbinders weist der hülsenförmige Anschlussstutzen einen sich in Richtung des ringförmigen Anschlagkragens verringernden Innendurchmesser auf.

Dadurch wird der technische Vorteil erreicht, dass durch den sich in Richtung des Anschlagkragens verringernden Innendurchmesser des hülsenförmigen Anschlussstutzens das Kunststoffrohr beim Einführen in den hülsenförmigen Anschlussstutzen radial komprimiert wird. Durch die radiale Komprimierung des Kunststoffrohrs wird sichergestellt, dass die Rohraußenwandung des Kunststoffrohrs wirksam an der Stutzeninnenwandung des hülsenförmigen Anschlussstutzens anliegt, wodurch eine wirksame Reibschweißverbindung sichergestellt werden kann.

In einer weiteren vorteilhaften Ausführungsform des Fluidverbinders weist der hülsenförmige Anschlussstutzen ein Einführende auf, an welchem das Kunststoffrohr eingeführt ist, wobei der Fluidverbinder einen Verbindungskörper umfasst, welcher an einem dem Kunststoffrohr abgewandten Ende in den hülsenförmige Anschlussstutzen eingeführt ist.

Dadurch wird der technische Vorteil erreicht, dass der Fluidverbinder zum wirksamen fluidtechnischen Verbinden des Kunststoffrohrs mit einem Verbindungskörper ausgebildet ist, wobei der Verbindungskörper insbesondere eine fluidtechnische Leitung, ein Bauteil oder Aggregat eines Kraftfahrzeuges umfassen kann. Dadurch, dass der Verbindungskörper und das Kunststoffrohr an unterschiedlichen Enden des hülsenförmigen Anschlussstutzens mit dem hülsenförmigen Anschlussstutzen verbunden sind, wird eine wirksame und fluiddichte Verbindung zwischen dem Verbindungskörper und dem Kunststoffrohr sichergestellt.

In einer weiteren vorteilhaften Ausführungsform des Fluidverbinders ist an einem dem Kunststoffrohr abgewandten Bereich des hülsenförmigen Anschlussstutzens ein Stutzenvorsprung angeordnet, wobei der Verbindungskörper eine Verbindungsstirnseite aufweist, welche an dem Stutzenvorsprung anliegt.

Dadurch wird der technische Vorteil erreicht, dass durch das Anliegen der Verbindungsstirnseite des Verbindungskörpers an dem Stutzenvorsprung des hülsenförmigen Anschlussstutzens eine wirksame fluidtechnische und fluiddichte Verbindung zwischen Verbindungskörper und dem hülsenförmigen Anschlussstutzen bereitgestellt werden kann.

Gemäß einem zweiten Aspekt der Erfindung wird die Aufgabe durch ein Verfahren zum Herstellen einer Reibschweißverbindung zwischen einem Kunststoffrohr und einem hülsenförmigen Anschlussstutzen innerhalb eines Fluidverbinders nach dem ersten Aspekt gelöst, wobei das Verfahren die folgenden Schritte umfasst, Einführen des Kunststoffrohrs in den hülsenförmigen Anschlussstutzen, Rotieren des Kunststoffrohrs in dem hülsenförmigen Anschlussstutzen, um Reibschmelze zu bilden, und Abkühlen des Fluidverbinders, um die Reibschweißverbindung zwischen dem Kunststoffrohr und dem hülsenförmigen Anschlussstutzen bereitzustellen.

Dadurch wird der technische Vorteil erreicht, dass durch das Verfahren eine stabile und fluiddichte Reibschweißverbindung zwischen dem Kunststoffrohr und dem hülsenförmigen Anschlussstutzen innerhalb des Fluidverbinders bereitgestellt werden kann.

In einer vorteilhaften Ausführungsform des Verfahrens wird das Rotieren des Kunststoffrohres während des Einführens des Kunststoffrohrs in den hülsenförmigen Anschlussstutzens durchgeführt, oder wird das Rotieren des Kunststoffrohres nach Abschluss des Einführens des Kunststoffrohrs in den hülsenförmigen Anschlussstutzens durchgeführt.

Dadurch wird der technische Vorteil erreicht, dass durch das Rotieren des Kunststoffrohres während des Einführens des Kunststoffrohrs in den hülsenförmigen Anschlussstutzens ein besonders wirksames partielles Schmelzen des Kunststoffrohres bereits während des Einführens erreicht wird. Wird das Kunststoffrohr erst nach Abschluss des Einführens des Kunststoffrohrs in den hülsenförmigen Anschlussstutzens rotiert, kann sichergestellt werden, dass die dabei entstehende Reibschmelze besonders wirksam innerhalb des Fluidverbinders aufgenommen wird.

In einer vorteilhaften Ausführungsform des Verfahrens umfasst das Verfahren den weiteren Schritt, Aufstecken des hülsenförmigen Anschlussstutzens auf einen Werkzeugdorn.

Dadurch wird der technische Vorteil erreicht, dass durch das Aufstecken des hülsenförmigen Anschlussstutzens auf den Werkzeugdorn, bei der Herstellung des Fluidverbinders eine besonders vorteilhafte Reibschweißverbindung erhalten wird. Das Aufstecken des hülsenförmigen Anschlussstutzens auf den Werkzeugdorn wird insbesondere vor dem Einführen des Kunststoffrohres in den hülsenförmigen Anschlussstutzen durchgeführt. Hierbei stabilisiert der Werkzeugdorn bei der Herstellung der Reibschweißverbindung den Übergang zwischen dem hülsenförmigen Anschlussstutzen und dem Kunststoffrohr. Ein besonderer Vorteil bei der Verwendung des Werkzeugdorns im Schweißwerkzeug ist, dass die Entstehung von Kunststoffspänen im Inneren des Kunststoffrohres auf ein Minimum reduziert werden kann. Ferner unterstützt der Werkzeugdorn die Führung und Ausrichtung des hülsenförmigen Anschlussstutzens und des Kunststoffrohrs gegeneinander. Zusätzlich wird der Entstehung von Mikrokanten, welche durch scharfkantige Durchmessersprünge bedingt sein können, entgegengewirkt und ein gleichmäßiger Anpressdruck des Kunststoffrohrs an dem Fluidverbinder wird sichergestellt.

Ausführungsbeispiele der Erfindung sind in den Zeichnungen dargestellt und werden im Folgenden näher beschrieben.

Es zeigen:
- Fig. 1: eine Ansicht eines in einen hülsenförmigen Anschlussstutzen eingeführten Kunststoffrohrs gemäß einer ersten Ausführungsform;
- Fig. 2: eine Ansicht eines hülsenförmigen Anschlussstutzen eines Fluidverbinders gemäß der ersten Ausführungsform;
- Fig. 3: eine Ansicht eines hülsenförmigen Anschlussstutzen eines Fluidverbinders gemäß einer zweiten Ausführungsform;
- Fig. 4: ein Verfahren zum Herstellen einer Reibschweißverbindung zwischen einem Kunststoffrohr und einem hülsenförmigen Anschlussstutzen innerhalb eines Fluidverbinders; und
- Fig. 5: eine Ansicht eines Fluidverbinders gemäß der ersten Ausführungsform auf einem Werkzeugdorn.

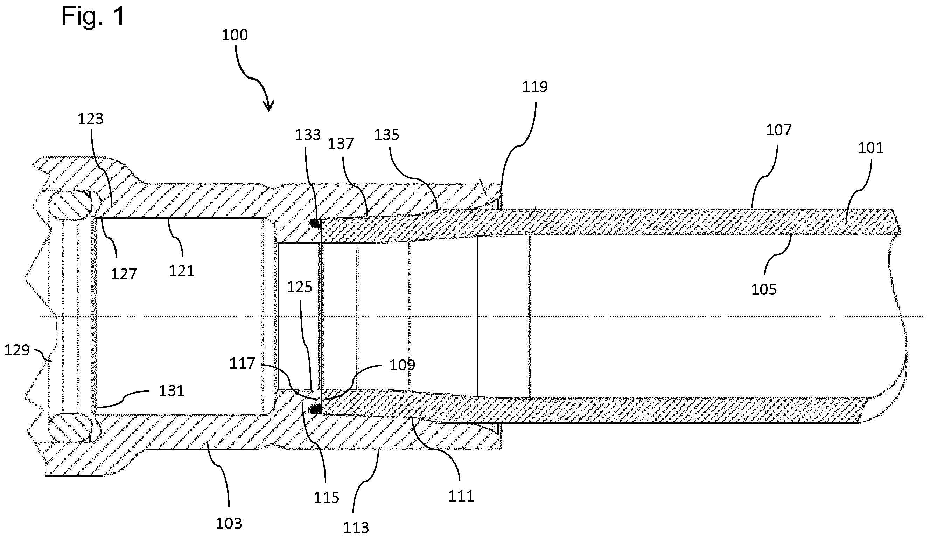

In Fig. 1 ist eine Seitenansicht eines in einen hülsenförmigen Anschlussstutzen eines Fluidverbinders eingeführten Kunststoffrohrs gemäß einer ersten Ausführungsform dargestellt. Der Fluidverbinder 100 ist in einer Schnittdarstellung dargestellt. Der Fluidverbinder 100 umfasst ein Kunststoffrohr 101, welches in einen hülsenförmigen Anschlussstutzen 103 eingeführt wird und mit dem hülsenförmigen Anschlussstutzen 103 stoffschlüssig verbunden ist. Der hülsenförmige Anschlussstutzen 103 und das Kunststoffrohr 101 sind rotationssymmetrisch ausgeführt, wodurch eine stoffschlüssige Verbindung zwischen dem hülsenförmigen Anschlussstutzen 103 und dem Kunststoffrohr 101 mittels eines Rotationsreibschweißverfahrens ermöglicht wird. Der erfindungsgemäße Fluidverbinder 100 kann beispielsweise im Bereich von Kunststoff-Getriebeölkühlerleitungen in einem Kraftfahrzeug eingesetzt, um eine sichere und dichte Verschweißung innerhalb des Fluidverbinders 100 sicherzustellen. Weitere Anwendungen des erfindungsgemäßen Fluidverbinders 100 sind im Bereich von Kraftstoffleitungen, Hydraulikleitungen, Kühl- und Warmwasserleitungen, Luftleitungen, SCR-Leitungen, Leitungen mit geringen Permeationsanforderungen, SCR-Befüllköpfen, rotationssymmetrischen Behältern, und/oder gasdichten Verbindungen möglich.

Das Kunststoffrohr 101 weist eine Rohrinnenwandung 105, eine Rohraußenwandung 107 und eine Rohrstirnseite 109 auf.

Der hülsenförmige Anschlussstutzen 103 weist eine Stutzeninnenwandung 111, eine Stutzenaußenwandung 113 und einen ringförmigen Anschlagkragen 115 auf, wobei der ringförmige Anschlagkragen 115 im Inneren des hülsenförmigen Anschlussstutzens 103 angeordnet ist und wobei der ringförmige Anschlagkragen 115 eine axial gerichtete Anschlagfläche 117 aufweist.

Der hülsenförmige Anschlussstutzen 103 weist ein Einführende 119 auf, an welchem das Kunststoffrohr 101 in das Innere des hülsenförmigen Anschlussstutzens 103 eingeführt werden kann. Hierbei weist der hülsenförmige Anschlussstutzen 103 einen sich in Richtung des ringförmigen Anschlagkragens 115 verringernden Innendurchmesser auf. Dadurch wird das Kunststoffrohr 101 beim Einführen in das Innere des hülsenförmigen Anschlussstutzens 103 radial komprimiert, so dass die Rohraußenwandung 107 des Kunststoffrohrs 101 wirksam an der Stutzeninnenwandung 111 des hülsenförmigen Anschlussstutzens 103 anliegt.

Bei einem vollständig in den hülsenförmigen Anschlussstutzen 103 eingeführten Kunststoffrohr 101 liegt die Rohrstirnseite 109 des Kunststoffrohrs 101 an der axial gerichteten Anschlagfläche 117 des ringförmigen Anschlagkragens 115 des hülsenförmigen Anschlussstutzens 103 und begrenzt somit die Einführbewegung des Kunststoffrohrs 101 in den hülsenförmigen Anschlussstutzen 103.

Nach dem Einführen des Kunststoffrohrs 101, bzw. alternativ während des Einführens des Kunststoffrohres 101, in den hülsenförmigen Anschlussstutzen 103 wird das Kunststoffrohr 101 in Rotation versetzt. Durch den Kontakt zwischen der Rohraußenwandung 107 des Kunststoffrohrs 101 und der Stutzeninnenwandung 111 des hülsenförmigen Anschlussstutzens 103 kommt es durch die dabei entstehende Reibungswärme zum einem partiellen Aufschmelzen der Rohraußenwandung 107 des Kunststoffrohres 101. Bei einem anschließenden Abkühlen des Fluidverbinders 100 kühlt die entstandene Kunststoffschmelze ebenfalls ab, um eine stoffschlüssige Verbindung, insbesondere eine Reibschweißverbindung, zwischen der Rohraußenwandung 107 des Kunststoffrohres 101 und der Stutzeninnenwandung 111 des hülsenförmigen Anschlussstutzens 103 zu bilden.

Nach dem Reibschweißvorgang bildet die Rohrinnenwandung 105 des Kunststoffrohres 101 eine Innenwandung des Fluidverbinders 100, welche sich von dem Einführende 119 des hülsenförmigen Anschlussstutzens 103 bis zu der axial gerichteten Anschlagfläche 117 des ringförmigen Anschlagkragens 115 des hülsenförmigen Anschlussstutzens 103 erstreckt.

Der hülsenförmige Anschlussstutzen 103 weist eine weitere Stutzeninnenwandung 121 auf, welche zwischen dem ringförmigen Anschlagkragen 115 und einem dem Kunststoffrohr 101 abgewandten Bereich 123 des hülsenförmigen Anschlussstutzens 103 gebildet ist. Der ringförmige Anschlagkragen 115 weist an einer dem Inneren des hülsenförmigen Anschlussstutzens 103 zugewandten Seite eine Krageninnenwandung 125 auf. Die weitere Stutzeninnenwandung 121 und die Krageninnenwandung 125 des hülsenförmigen Anschlussstutzens 103 bilden eine weitere Innenwandung des Fluidverbinders 100, welche sich zusammen mit der Innenwandung des Fluidverbinders 100 durchgehend von dem dem Kunststoffrohr 101 abgewandten Bereich 123 des hülsenförmigen Anschlussstutzens 103 bis zu dem Einführende 119 des hülsenförmigen Anschlussstutzens 103 erstrecken.

Durch die sich durchgehend in dem Fluidverbinder 100 erstreckende Innenwandung und weitere Innenwandung des Fluidverbinders 100 kommt es zu einer besonders vorteilhaften strömungsoptimierten Ausführung des Übergangs an dem ringförmigen Anschlagkragen 115 des hülsenförmigen Anschlussstutzen 103 und des Kunststoffrohrs 101. Insbesondere können ungewünschte Hinterschnitte und Durchmessersprünge vermieden werden.

An dem dem Kunststoffrohr 101 abgewandten Bereich 123 des hülsenförmigen Anschlussstutzens 103 ist ein Stutzenvorsprung 127 angeordnet. Der Fluidverbinder 100 umfasst einen Verbindungskörper 129, welcher an einem dem Kunststoffrohr 101 abgewandten Ende in den hülsenförmige Anschlussstutzen 103 eingeführt ist, wobei der Verbindungskörper 129 eine Verbindungsstirnseite 131 aufweist, welche an dem Stutzenvorsprung 127 anliegt.

Der Verbindungskörper 129 kann insbesondere ein fluidführendes Bauteil, umfassen, so dass der Fluidverbinder 100 eine wirksame fluidtechnische Verbindung zwischen dem fluidführenden Bauteil und dem Kunststoffrohr 101 bereitstellen kann.

Zwischen dem ringförmigen Anschlagkragen 115 und der Stutzeninnenwandung 111 des hülsenförmigen Anschlussstutzens 103 ist eine umlaufende Rille 133 oder Tasche 133 für die Aufnahme von Reibschmelze gebildet. Beim Verbinden des Kunststoffrohrs 101 mit dem hülsenförmigen Anschlussstutzens 103 wird somit sichergestellt, dass beim Reibschweißen entstehende Kunststoffschmelze wirksam in der umlaufenden Rille 133 oder Tasche 133 aufgenommen werden kann, wodurch einem unkontrollierten Austreten der Kunststoffschmelze entgegengewirkt werden kann.

Ferner ist zwischen dem Einführende 119 und dem ringförmigen Anschlagkragen 115 des hülsenförmigen Anschlussstutzens 103 in der Stutzeninnenwandung 111 eine umlaufende Vertiefung 135 oder Konturierung 135 gebildet, wobei die umlaufende Vertiefung 135 oder Konturierung 135 insbesondere eine Eindellung oder ein Wellental umfasst, und für die Aufnahme von rückströmender Reibschmelze gebildet ist.

Zwischen dem ringförmigen Anschlagkragen 115 und der umlaufenden Vertiefung 135 oder Konturierung 135 des hülsenförmigen Anschlussstutzens 103 ist in der Stutzeninnenwandung 111 ein Schweißbereich 137 der Stutzeninnenwandung 111 gebildet. Die Rohraußenwandung 107 des Kunststoffrohrs 101 ist mit dem Schweißbereich 137 der Stutzeninnenwandung 111 mittels der Reibschweißverbindung verbunden.

Die Reibschweißverbindung zwischen dem Kunststoffrohrs 101 und dem hülsenförmigen Anschlussstutzen 103 wird somit zwischen der Rohraußenwandung 107 des Kunststoffrohrs 101 und dem Schweißbereich 137 der Stutzeninnenwandung 111 des hülsenförmigen Anschlussstutzens 103 gebildet. Somit ist der Schweißbereich 137 auf einer dem ringförmigen Anschlagkragen 115 zugewandten Seite durch die umlaufende Rille 133 oder Tasche 133 begrenzt und ist der Schweißbereich 137 auf einer dem Einführende 119 zugewandten Seite durch die umlaufende Vertiefung 135 oder Konturierung 135 begrenzt.

Wenn während des Reibschweißvorgangs entstehende Reibschmelze in Richtung der Rohrstirnseite 109 des Kunststoffrohrs 101 austritt, wird die austretende Reibschmelze in der Rille 133 oder Tasche 133 aufgenommen. Wenn alternativ oder zusätzlich während des Reibschweißvorgangs entstehende Reibschmelze in Richtung des Einführendes 119 des hülsenförmigen Anschlussstutzens 103 austritt, wird die austretende Reibschmelze in der umlaufende Vertiefung 135 oder Konturierung 135 aufgenommen.

Dadurch kann eine besondere technische Sauberkeit der Reibschweißverbindung innerhalb des Fluidverbinders 100 gewährleistet werden. Hierbei kann sichergestellt werden, dass keine Reibschmelze, bzw. Kunststoffspäne in das Innere des Kunststoffrohres 101, bzw. Reibschmelze oder Kunststoffspäne, in das Innere des hülsenförmigen Anschlussstutzens 103 gelangen, wodurch durch den Fluidverbinder 100 geleitetes Fluid nicht verunreinigt wird.

In der in Fig. 1 dargestellten Ausführungsform weist der Schweißbereich 137 der Stutzeninnenwandung 111 des hülsenförmigen Anschlussstutzens 103 keine Konturierung auf, wodurch eine wirksame Reibschweißverbindung zwischen dem hülsenförmigen Anschlussstutzen 103 und dem Kunststoffrohr 101 sichergestellt werden kann.

Das Einführende 119 des hülsenförmigen Anschlussstutzens 103 kann als ein abgerundetes Einführende 119 gebildet sein, wodurch eine Toleranzkompensation beim Einführen von unterschiedlich ausgebildeten Kunststoffrohren 101 in den hülsenförmigen Anschlussstutzen 103 sichergestellt werden kann. Somit kann bei leicht unterschiedlichen Durchmessern von unterschiedlichen Kunststoffrohren 101 sichergestellt werden, dass die Kunststoffrohre 101 wirksam in den hülsenförmigen Anschlussstutzen 103 eingeführt werden können.

Somit kann durch den erfindungsgemäßen Fluidverbinder 100 sichergestellt werden, dass optimale Eigenschaften der Reibschweißverbindung sichergestellt werden können, wie z.B. eine ausreichende Dichtigkeit und Festigkeit unter der statischen und dynamischen Beaufschlagung mit Innendruck bei gleichzeitiger thermischer Belastung. Es kann ein kontinuierlicher Innendurchmesser des Fluidverbinders 100 sichergestellt werden, wodurch strömungsoptimierte Eigenschaften des Fluidverbinders 100 ermöglicht werden. Ferner kann ein größerer Durchflussquerschnitt in dem Fluidverbinder 100 sichergestellt werden, da kein Innenkranz diesen beschränkt. Die robuste und prozesssichere Produktion von Fluidverbindern 100 ermöglicht die Herstellung von Fluidverbindern 100 unter Serienbedingungen. Die wirksame Reibschweißverbindung stellt ein Zusammenfügen der Bauteile mit möglichst geringer Entstehung von Verunreinigungen, z.B. Kunststoffspänen, sicher.

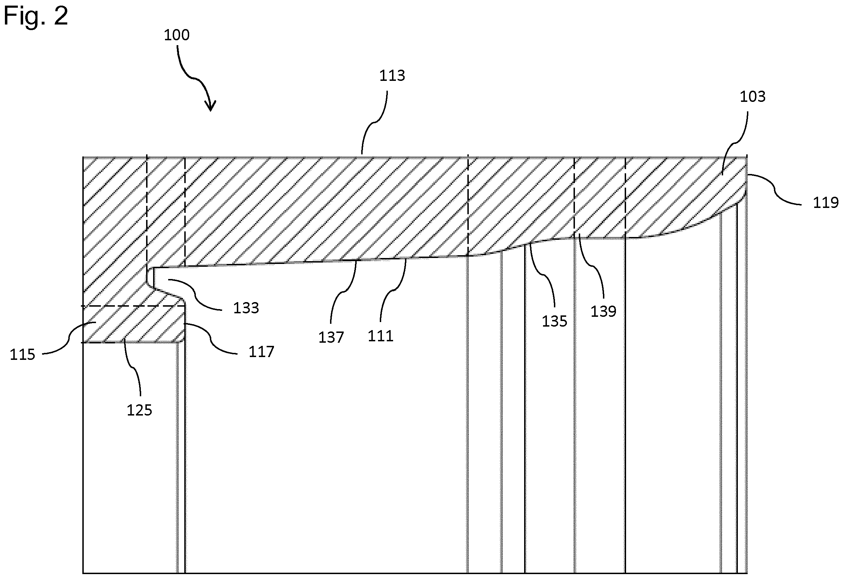

Fig. 2 zeigt eine Seitenansicht eines hülsenförmigen Anschlussstutzens eines Fluidverbinders gemäß der ersten Ausführungsform. In der in Fig. 2 gewählten Darstellung ist der hülsenförmigen Anschlussstutzen 103 in einer Schnittdarstellung dargestellt und ist ohne ein eingeführtes Kunststoffrohr 101 dargestellt. Aus darstellungstechnischen Gründen sind verschiedene Bereiche des hülsenförmigen Anschlussstutzens 103 durch gestrichelte Linien voneinander abgegrenzt.

Der hülsenförmige Anschlussstutzen 103 weist eine Stutzeninnenwandung 111, eine Stutzenaußenwandung 113 und einen ringförmigen Anschlagkragen 115 auf, wobei der ringförmige Anschlagkragen 115 im Inneren des hülsenförmigen Anschlussstutzens 103 angeordnet ist und wobei der ringförmige Anschlagkragen 115 eine axial gerichtete Anschlagfläche 117 aufweist. Der ringförmige Anschlagkragen 115 weist ferner an einer dem Inneren des hülsenförmigen Anschlussstutzens 103 zugewandten Seite eine Krageninnenwandung 125 aufweist.

Die in der Fig. 1 dargestellte weitere Stutzeninnenwandung 121 des hülsenförmigen Anschlussstutzens 103 mit einem Stutzenvorsprung 127 und dem in den hülsenförmigen Anschlussstutzen 103 eingeführten Verbindungskörper 129 ist in Fig. 2 nicht dargestellt.

Der hülsenförmige Anschlussstutzen 103 weist ein Einführende 119 auf, an welchem das Kunststoffrohr 101 in das Innere des hülsenförmigen Anschlussstutzens 103 eingeführt werden kann. Das Einführende 119 ist als ein abgerundetes Einführende 119 gebildet, wodurch Kunststoffrohre 101 mit unterschiedlichen Durchmessern wirksam in den hülsenförmigen Anschlussstutzen 103 eingeführt werden können.

Zwischen dem ringförmigen Anschlagkragen 115 und der Stutzeninnenwandung 111 des hülsenförmigen Anschlussstutzens 103 ist eine umlaufende Rille 133 oder Tasche 133 für die Aufnahme von Reibschmelze gebildet, um beim Reibschweißen entstehende Kunststoffschmelze wirksam in der umlaufenden Rille 133 oder Tasche 133 aufzunehmen.

Ferner ist zwischen dem Einführende 119 und dem ringförmigen Anschlagkragen 115 des hülsenförmigen Anschlussstutzens 103 in der Stutzeninnenwandung 111 eine umlaufende Vertiefung 135 oder Konturierung 135 gebildet, wobei die umlaufende Vertiefung 135 oder Konturierung 135 insbesondere eine Eindellung oder ein Wellental umfasst, und für die Aufnahme von rückströmender Reibschmelze gebildet ist.

Zwischen dem ringförmigen Anschlagkragen 115 und der umlaufenden Vertiefung 135 oder Konturierung 135 des hülsenförmigen Anschlussstutzens 103 ist in der Stutzeninnenwandung 111 ein Schweißbereich 137 der Stutzeninnenwandung 111 gebildet. Die Rohraußenwandung 107 eines eingeführten Kunststoffrohrs 101 ist mit dem Schweißbereich 137 der Stutzeninnenwandung 111 mittels der Reibschweißverbindung verbunden.

Der Schweißbereich 137 weist in der in Fig. 2 dargestellten ersten Ausführungsform eine sich entlang der Längsrichtung des hülsenförmigen Anschlussstutzens 103 erstreckende konturlose Oberfläche auf, wodurch ein wirksames Einführen des Kunststoffrohres 101 und eine wirksame Reibschweißverbindung zwischen dem Kunststoffrohr 101 und dem hülsenförmigen Anschlussstutzen 103 bereitgestellt werden kann.

Wenn während des Reibschweißvorgangs entstehende Reibschmelze von dem Schweißbereich 137 aus in Richtung des ringförmigen Anschlagkragens 115 austritt, wird die austretende Reibschmelze in der Rille 133 oder Tasche 133 aufgenommen. Wenn alternativ oder zusätzlich während des Reibschweißvorgangs entstehende Reibschmelze von dem Schweißbereich 137 aus in Richtung des Einführendes 119 austritt, wird die austretende Reibschmelze in der umlaufende Vertiefung 135 oder Konturierung 135 aufgenommen.

Ferner ist zwischen der umlaufenden Vertiefung 135 oder Konturierung 135 und dem Einführende 119 in der Stutzeninnenwandung 111 ein Übergangsbereich 139 gebildet.

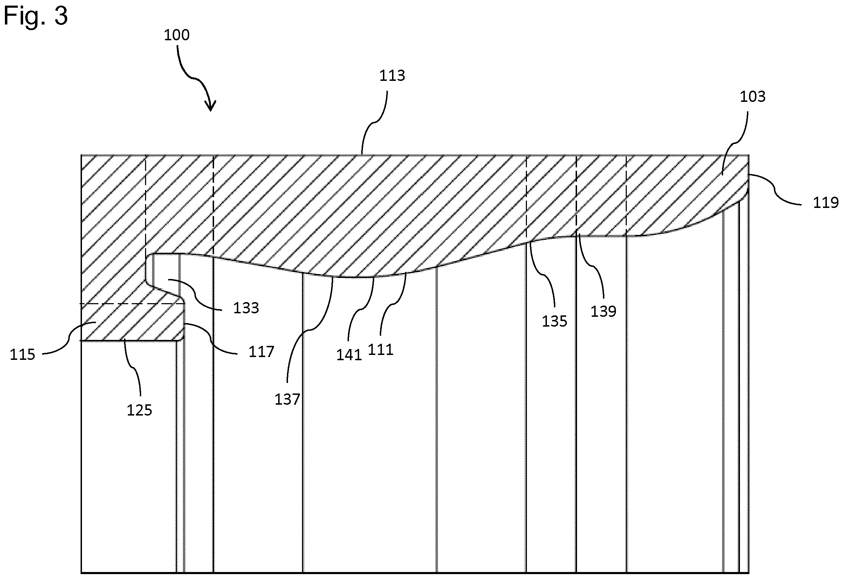

Fig. 3 zeigt eine Seitenansicht eines hülsenförmigen Anschlussstutzens eines Fluidverbinders gemäß der zweiten Ausführungsform. In der in Fig. 3 gewählten Darstellung ist der hülsenförmige Anschlussstutzen 103 in einer Schnittdarstellung dargestellt und ist ohne ein eingeführtes Kunststoffrohr 101 dargestellt. Aus darstellungstechnischen Gründen sind verschiedene Bereiche des hülsenförmigen Anschlussstutzens 103 durch gestrichelte Linien voneinander abgegrenzt.

Der hülsenförmige Anschlussstutzen 103 weist eine Stutzeninnenwandung 111, eine Stutzenaußenwandung 113, einen ringförmigen Anschlagkragen 115 mit einer Anschlagfläche 117 und einer Krageninnenwandung 125, sowie ein Einführende 119 auf. Die weitere Stutzeninnenwandung 121, sowie der Stutzenvorsprung 127 und der Verbindungskörper 129 sind in Fig. 3 nicht dargestellt.

An der Stutzeninnenwandung 111 ist eine Rille 133 oder Tasche 133, eine Vertiefung 135 oder Konturierung 135, ein Schweißbereich 137, und ein Übergangsbereich 139 angeordnet.

Der in Fig. 3 gemäß der zweiten Ausführungsform dargestellte hülsenförmige Anschlussstutzen 103 entspricht der in Fig. 2 dargestellten ersten Ausführungsform bis darauf, dass der Schweißbereich 137 der in der Fig. 3 dargestellten zweiten Ausführungsform einen Wellenberg 141 aufweist, welcher in Richtung des Einführendes 119 in ein Wellental übergeht, welches wiederum die Vertiefung 135 oder Konturierung 135 bildet. Durch den Wellenberg 141 wird der Vorteil erreicht, dass während des Reibschweißvorgangs entstehende Reibschweiße, bzw. Kunststoffspäne, optimal in der durch den Wellenberg 141 vergrößerten Rille 133 oder Tasche 133 aufgenommen werden können. Hierdurch kann die Entstehung von austretender Reibschweiße, bzw. von Kunststoffspänen, bei einem axialen Vorschub unter Rotation des Kunststoffrohres 101 reduziert werden. Somit kann eine wirksame Reibschweißverbindung zwischen dem Kunststoffrohr 101 und dem hülsenförmigen Anschlussstutzen 103 bereitgestellt werden.

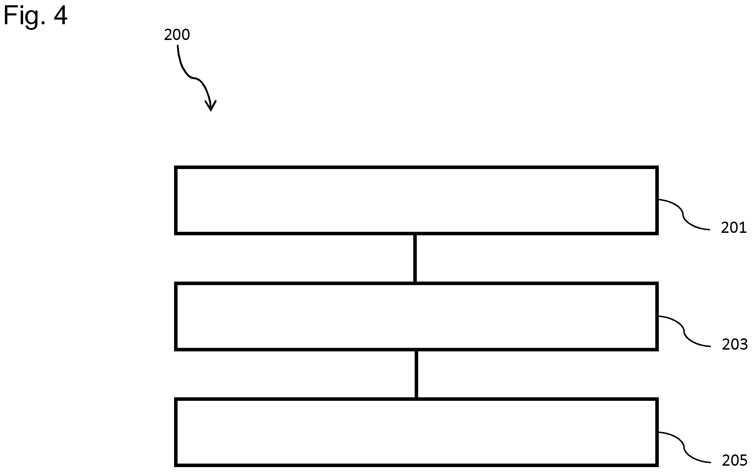

Fig. 4 zeigt ein Verfahren zum Herstellen einer Reibschweißverbindung zwischen einem Kunststoffrohr und einem hülsenförmigen Anschlussstutzen innerhalb eines Fluidverbinders nach einem vorhergehenden Ausführungsformen.

Das Verfahren 200 umfasst die folgenden Schritte, Einführen 201 des Kunststoffrohrs 101 in den hülsenförmigen Anschlussstutzen 103, Rotieren 203 des Kunststoffrohrs 101 in dem hülsenförmigen Anschlussstutzen 103, um Reibschmelze zu bilden, und Abkühlen 205 des Fluidverbinders 100, um die Reibschweißverbindung zwischen dem Kunststoffrohr 101 und dem hülsenförmigen Anschlussstutzen 103 bereitzustellen.

Hierbei kann das Rotieren 203 des Kunststoffrohres 101 während des Einführens 201 des Kunststoffrohrs 101 in den hülsenförmigen Anschlussstutzens 103 durchgeführt werden.

Gemäß einer ersten Alternative kann zu Beginn des Einführens 201 des Kunststoffrohrs 101 das Kunststoffrohr 101 bereits rotiert werden und das Rotieren 203 des Kunststoffrohres 101 beendet werden, wenn das Kunststoffrohr 101 innerhalb des hülsenförmigen Anschlussstutzens 103 bis in die Endposition eingeführt wurde.

Gemäß einer zweiten Alternative wird bei Beginn des Einführens 201 des Kunststoffrohrs 101 das Kunststoffrohr 101 noch nicht rotiert, sondern das Rotieren 203 des Kunststoffrohres 101 wird erst gestartet, wenn das Kunststoffrohr 101 bereits zu einem Teil in den hülsenförmigen Anschlussstutzen 103 eingeführt wurde. Das Rotieren 203 des Kunststoffrohres 101 wird beendet, wenn das Kunststoffrohr 101 innerhalb des hülsenförmigen Anschlussstutzens 103 bis in die Endposition eingeführt wurde.

Gemäß einer dritten Alternativ wird das Rotieren 203 des Kunststoffrohres 101 nach Abschluss des Einführens 201 des Kunststoffrohrs 101 in den hülsenförmigen Anschlussstutzen 103 durchgeführt.

Typische Verfahrenskenngrößen des Reibschweißverfahrens sind wie folgt zusammengefasst, die Umdrehungen während der Rotation 203 umfassen einen Bereich von 50 U/min bis 1300 U/min, die Schweißzeit umfasst einen Bereich von 0,5 Sekunden bis 1,5 Sekunden, die Fügekraft beim Einführen des Kunststoffrohrs 101 in den hülsenförmigen Anschlussstutzen 103 umfasst einen Bereich zwischen 300 N bis 900 N, der Kühlweg umfasst einen Bereich von 0,1 mm bis 1,0 mm, die Kühlkraft umfasst einen Bereich von 300 N bis 9000 N, und die Anzahl der Umdrehungen umfasst einen Bereich von 8 Umdrehungen bis 25 Umdrehungen.

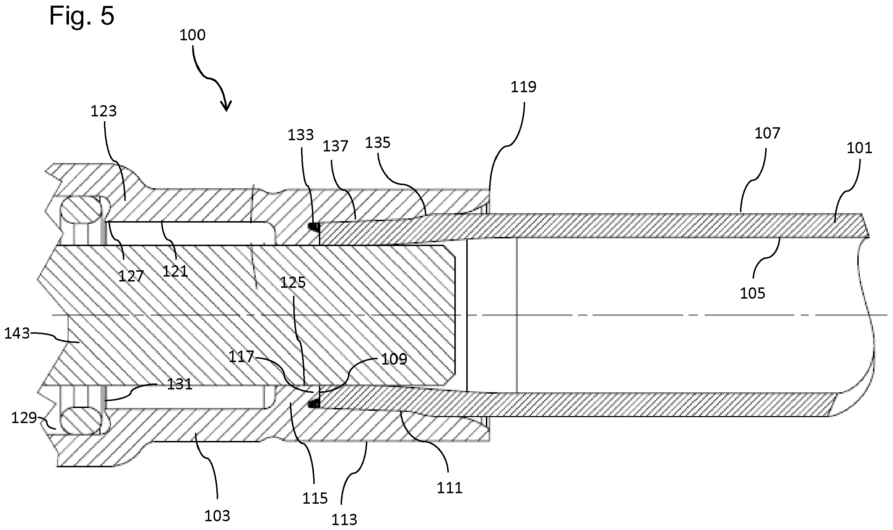

Fig. 5 zeigt eine Ansicht eines Fluidverbinders gemäß der ersten Ausführungsform auf einem Werkzeugdorn in einer Schnittdarstellung.

Der hülsenförmige Anschlussstutzen 103 weist eine Stutzeninnenwandung 111, eine Stutzenaußenwandung 113, einen ringförmigen Anschlagkragen 115 mit einer Anschlagfläche 117 und einer Krageninnenwandung 125, sowie ein Einführende 119 auf. Der hülsenförmige Anschlussstutzen 103 weist eine weitere Stutzeninnenwandung 121, einen Stutzenvorsprung 127 und einen Verbindungskörper 129 auf.

An der Stutzeninnenwandung 111 ist eine Rille 133 oder Tasche 133, eine Vertiefung 135 oder Konturierung 135 und ein Schweißbereich 137 angeordnet. Das Kunststoffrohr 101 weist eine Rohrinnenwandung 105, eine Rohraußenwandung 107 und eine Rohrstirnseite 109 auf.

Bei der Herstellung der Reibschweißverbindung wird der Fluidverbinder 100 auf den Werkzeugdorn 143 aufgesteckt. Hierbei liegt der Werkzeugdorn 143 an der Krageninnenwandung 125 des ringförmigen Anschlagkragens 115 des hülsenförmigen Anschlussstutzens 103 umlaufend an und liegt der Werkzeugdorn 143 zumindest abschnittsweise an der Rohrinnenwandung 105 des Kunststoffrohres 101 an. Dadurch stabilisiert der Werkzeugdorn 143 bei der Herstellung der Reibschweißverbindung den Übergang zwischen dem hülsenförmigen Anschlussstutzen 103 und dem Kunststoffrohr 101.

Ferner kann durch den Einsatz des Werkzeugdorns im Schweißwerkzeug die Entstehung von Kunststoffspänen im Inneren des Kunststoffrohres 101 auf ein Minimum reduziert werden. Ferner unterstützt diese Art der Werkzeugauslegung die Führung und Ausrichtung der Fügepartner gegeneinander. Zusätzlich wird der Entstehung von Mikrokanten, welche durch scharfkantige Durchmessersprünge bedingt sein können, entgegengewirkt und ein gleichmäßiger Anpressdruck des Kunststoffrohrs 101 an dem Fluidverbinder 100 wird sichergestellt.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Fluidverbinder
- 101: Kunststoffrohr
- 103: Hülsenförmiger Anschlussstutzen
- 105: Rohrinnenwandung
- 107: Rohraußenwandung
- 109: Rohrstirnseite
- 111: Stutzeninnenwandung
- 113: Stutzenaußenwandung
- 115: Ringförmiger Anschlagkragen
- 117: Anschlagfläche
- 119: Einführende
- 121: Weitere Stutzeninnenwandung
- 123: Dem Kunststoffrohr abgewandter Bereich des hülsenförmigen Anschlussstutzens
- 125: Krageninnenwandung
- 127: Stutzenvorsprung
- 129: Verbindungskörper
- 131: Verbindungsstirnseite
- 133: Rille oder Tasche
- 135: Vertiefung oder Konturierung
- 137: Schweißbereich der Stutzeninnenwandung
- 139: Übergangsbereich
- 141: Wellenberg
- 143: Werkzeugdorn
- 200: Verfahren zum Herstellen einer Reibschweißverbindung zwischen einem Kunststoffrohr und einem hülsenförmigen Anschlussstutzen innerhalb eines Fluidverbinders
- 201: Einführen des Kunststoffrohrs in den hülsenförmigen Anschlussstutzen
- 203: Rotieren des Kunststoffrohrs in dem hülsenförmigen Anschlussstutzen
- 205: Abkühlen des Fluidverbinders

## Patentansprüche

1. Fluidverbinder (100), mit:
einem hülsenförmigen Anschlussstutzen (103) mit einer Stutzeninnenwandung (111) und einem im Inneren des hülsenförmigen Anschlussstutzens (103) gebildeten ringförmigen Anschlagkragen (115), der eine axial gerichtete Anschlagfläche (117) aufweist; und
einem Kunststoffrohr (101), das eine Rohrinnenwandung (105), eine Rohraußenwandung (107) und eine Rohrstirnseite (109) aufweist, wobei die Rohrstirnseite (109) des Kunststoffrohrs (101) die axial gerichtete Anschlagfläche (117) kontaktiert, und wobei die Rohraußenwandung (107) des Kunststoffrohrs (101) mit der Stutzeninnenwandung (111) des hülsenförmigen Anschlussstutzens (103) mittels einer Reibschweißverbindung verbunden ist,
**dadurch gekennzeichnet, dass** zwischen dem ringförmigen Anschlagkragen (115) und der Stutzeninnenwandung (111) des hülsenförmigen Anschlussstutzens (103) eine umlaufende Rille (133) oder Tasche (133) für die Aufnahme von Reibschmelze gebildet ist.

2. Fluidverbinder (100) nach Anspruch 1, wobei der hülsenförmige Anschlussstutzen (103) ein Einführende (119) aufweist, an welchem das Kunststoffrohr (101) eingeführt ist, und wobei in der Stutzeninnenwandung (111) des hülsenförmigen Anschlussstutzens (103) zwischen dem ringförmigen Anschlagkragen (115) und dem Einführende (119) eine umlaufende Vertiefung (135) oder Konturierung (135), insbesondere eine Eindellung oder ein Wellental, für die Aufnahme rückströmender Reibschmelze gebildet ist.

3. Fluidverbinder (100) nach Anspruch 2, wobei in der Stutzeninnenwandung (111) des hülsenförmigen Anschlussstutzens (103) zwischen der umlaufenden Vertiefung (135) oder Konturierung (135) und dem Einführende (119) ein Übergangsbereich (139) gebildet ist.

4. Fluidverbinder (100) nach Anspruch 2 oder 3, wobei in der Stutzeninnenwandung (111) zwischen dem ringförmigen Anschlagkragen (115) und der umlaufenden Vertiefung (135) oder Konturierung (135) ein Schweißbereich (137) der Stutzeninnenwandung (111) gebildet ist, wobei die Rohraußenwandung (107) des Kunststoffrohrs (101) mit dem Schweißbereich (137) der Stutzeninnenwandung (111) mittels der Reibschweißverbindung verbunden ist.

5. Fluidverbinder (100) nach Anspruch 4, wobei der Schweißbereich (137) eine sich entlang der Längsrichtung des hülsenförmigen Anschlussstutzens (103) erstreckende konturlose Oberfläche aufweist, oder wobei der Schweißbereich (137) eine Erhöhung aufweist.

6. Fluidverbinder (100) nach einem der vorstehenden Ansprüche, wobei der hülsenförmige Anschlussstutzen (103) ein Einführende (119) aufweist, an welchem das Kunststoffrohr (101) eingeführt ist, und wobei in der Stutzeninnenwandung (111) des hülsenförmigen Anschlussstutzens (103) zwischen dem ringförmigen Anschlagkragen (115) und dem Einführende (119) eine umlaufende wellenförmige Verformung mit einem Wellenberg (141) und einem Wellental für die Aufnahme rückströmender Reibschmelze gebildet ist.

7. Fluidverbinder (100) nach einem der vorstehenden Ansprüche, wobei die Rohrinnenwandung (105) des Kunststoffrohrs (101) eine Innenwandung des Fluidverbinders (100) bildet, welche sich von der Anschlagfläche (117) bis zu einem Einführende (119) des hülsenförmigen Anschlussstutzens (103) erstreckt.

8. Fluidverbinder (100) nach einem der vorstehenden Ansprüche, wobei der hülsenförmige Anschlussstutzen (103) eine weitere Stutzeninnenwandung (121) aufweist, welche zwischen dem ringförmigen Anschlagkragen (115) und einem dem Kunststoffrohr (101) abgewandten Bereich (123) des hülsenförmigen Anschlussstutzens (103) gebildet ist,
wobei der ringförmige Anschlagkragen (115) an einer dem Inneren des hülsenförmigen Anschlussstutzens (103) zugewandten Seite eine Krageninnenwandung (125) aufweist,
und wobei die weitere Stutzeninnenwandung (121) und die Krageninnenwandung (125) eine weitere Innenwandung des Fluidverbinders (100) bilden, welche sich von dem dem Kunststoffrohr (101) abgewandten Bereich (123) bis zu dem ringförmigen Anschlagkragen (115) des hülsenförmigen Anschlussstutzens (103) erstreckt.

9. Fluidverbinder (100) nach einem der vorstehenden Ansprüche, wobei der hülsenförmige Anschlussstutzen (103) ein abgerundetes Einführende (119) aufweist.

10. Fluidverbinder (100) nach einem der vorstehenden Ansprüche, wobei der hülsenförmige Anschlussstutzen (103) einen sich in Richtung des ringförmigen Anschlagkragens (115) verringernden Innendurchmesser aufweist.

11. Fluidverbinder (100) nach einem der vorstehenden Ansprüche, wobei der hülsenförmige Anschlussstutzen (103) ein Einführende (119) aufweist, an welchem das Kunststoffrohr (101) eingeführt ist, wobei der Fluidverbinder (100) einen Verbindungskörper (129) umfasst, welcher an einem dem Kunststoffrohr (101) abgewandten Ende in den hülsenförmigen Anschlussstutzen (103) eingeführt ist.

12. Fluidverbinder (100) nach Anspruch 11, wobei an einem dem Kunststoffrohr (101) abgewandten Bereich (123) des hülsenförmigen Anschlussstutzens (103) ein Stutzenvorsprung (127) angeordnet ist, wobei der Verbindungskörper (129) eine Verbindungsstirnseite (131) aufweist, welche an dem Stutzenvorsprung (127) anliegt.

13. Verfahren (200) zum Herstellen einer Reibschweißverbindung zwischen einem Kunststoffrohr (101) und einem hülsenförmigen Anschlussstutzen (103) innerhalb eines Fluidverbinders (100) nach einem der vorstehenden Ansprüche 1 bis 12, wobei das Verfahren (200) die folgenden Schritte umfasst,
Einführen (201) des Kunststoffrohrs (101) in den hülsenförmigen Anschlussstutzen (103),
Rotieren (203) des Kunststoffrohrs (101) in dem hülsenförmigen Anschlussstutzen (103), um Reibschmelze zu bilden, und
Abkühlen (205) des Fluidverbinders (100), um die Reibschweißverbindung zwischen dem Kunststoffrohr (101) und dem hülsenförmigen Anschlussstutzen (103) bereitzustellen.

14. Verfahren (200) nach Anspruch 13, wobei das Rotieren (203) des Kunststoffrohrs (101) während des Einführens (201) des Kunststoffrohrs (101) in den hülsenförmigen Anschlussstutzens (103) durchgeführt wird, oder wobei das Rotieren (203) des Kunststoffrohrs (101) nach Abschluss des Einführens (201) des Kunststoffrohrs (101) in den hülsenförmigen Anschlussstutzens (103) durchgeführt wird.

## Claims

1. Fluid connector (100), comprising:
a sleeve-shaped connection piece (103) comprising a socket inner wall (111) and a ring-shaped stop collar (115), which is formed in the interior of the sleeve-shaped connection piece (115) and which comprises an axially directed stop surface (117); and
a plastic pipe (101), which comprises a pipe inner wall (105), a pipe outer wall (107) and a pipe end face (109), wherein the pipe end face (109) of the plastic pipe (101) contacts the axially directed stop face (117), and wherein the pipe outer wall (107) of the plastic pipe (101) is connected to the socket inner wall (111) of the sleeve-shaped connecting piece (103) by means of a friction welding connection,
**characterized in that**
a circumferential groove (133) or pocket (133) for receiving friction melt is formed between the ring-shaped stop collar (115) and the socket inner wall (111) of the sleeve-shaped connecting piece (103).

2. Fluid connector (100) according to claim 1, wherein the sleeve-shaped connection piece (103) comprises an insertion end (119), at which the plastic tube (101) is inserted, and wherein in the socket inner wall (111) of the sleeve-shaped connection piece (103) between the ring-shaped stop collar (115) and the insertion end (119) a circumferential recess (135) or contouring (135), in particular an indentation or a trough, is formed for receiving back-flowing friction melt.

3. Fluid connector (100) according to claim 2, wherein a transition region (139) is formed in the socket inner wall (111) of the sleeve-shaped connecting piece (103) between the circumferential recess (135) or contouring (135) and the insertion end (119).

4. Fluid connector (100) according to claim 2 or 3, wherein in the socket inner wall (111) between the ring-shaped stop collar (115) and the circumferential recess (135) or contouring (135), a welding area (137) of the socket inner wall (111) is formed, wherein the outer tube wall (107) of the plastic tube (101) is connected to the welding area (137) of the inner tube wall (111) by means of the friction welding connection.

5. The fluid connector (100) according to claim 4, wherein the welding area (137) comprises a contour-less surface extending along the longitudinal direction of the sleeve-shaped connecting piece (103), or wherein the welding area (137) comprises an elevation.

6. Fluid connector (100) according to one of the preceding claims, wherein the sleeve-shaped connection piece (103) has an insertion end (119), at which the plastic tube (101) is inserted, and wherein in the socket inner wall (111) of the sleeve-shaped connection piece (103) a circumferential wave-shaped deformation with a wave crest (141) and a wave trough for receiving back-flowing friction melt is formed between the ring-shaped stop collar (115) and the insertion end (119).

7. Fluid connector (100) according to one of the preceding claims, wherein the inner tube wall (105) of the plastic tube (101) forms an inner wall of the fluid connector (100), which extends from the stop surface (117) to an insertion end (119) of the sleeve-shaped connecting piece (103).

8. Fluid connector (100) according to one of the preceding claims, wherein the sleeve-shaped connection piece (103) comprises a further socket inner wall (121), which is formed between the ring-shaped stop collar (115) and an area (123) of the sleeve-shaped connection piece (103), which faces away from the plastic tube (101),
wherein the ring-shaped stop collar (115) comprises a collar inner wall (125) on a side facing the interior of the sleeve-shaped connecting piece (103),
and wherein the further socket inner wall (121) and the collar inner wall (125) form a further inner wall of the fluid connector (100), which extends from the area (123) facing away from the plastic pipe (101) to the ring-shaped stop collar (115) of the sleeve-shaped connecting piece (103).

9. Fluid connector (100) according to any one of the preceding claims, wherein the sleeve-shaped connecting piece (103) comprises a rounded insertion end (119).

10. Fluid connector (100) according to any one of the preceding claims, wherein the sleeve-shaped connecting piece (103) comprises an inner diameter, which decreases in the direction of the ring-shaped stop collar (115).

11. Fluid connector (100) according to one of the preceding claims, wherein the sleeve-shaped connecting piece (103) comprises an insertion end (119), at which the plastic tube (101) is inserted, wherein the fluid connector (100) comprises a connecting body (129), which is inserted into the sleeve-shaped connecting piece (103) at one end facing away from the plastic pipe (101).

12. Fluid connector (100) according to claim 11, wherein a socket projection (127) is arranged on a region (123) of the sleeve-shaped connecting piece (103) facing away from the plastic pipe (101), wherein the connecting body (129) comprises a connection end face (131) which bears against the socket projection (127).

13. Method (200) for producing a friction weld connection between a plastic tube (101) and a sleeve-shaped connecting piece (103) within a fluid connector (100) according to one of the preceding claims 1 to 12, the method (200) comprising the following steps,
Inserting (201) the plastic tube (101) into the sleeve-shaped connecting piece (103),
Rotating (203) the plastic tube (101) in the sleeve-shaped connecting piece (103) to form friction melt, and
Cooling (205) the fluid connector (100) in order to provide the friction weld connection between the plastic tube (101) and the sleeve-shaped connecting piece (103).

14. The method (200) according to claim 13, wherein the rotation (203) of the plastic tube (101) is carried out during the insertion (201) of the plastic tube (101) into the sleeve-shaped connecting piece (103), or wherein the rotation (203) of the plastic tube (101) is carried out after the insertion (201) of the plastic pipe (101) into the sleeve-shaped connecting piece (103).

## Revendications

1. Connecteur fluidique (100) comprenant :
une tubulure de raccordement (103) en forme de manchon qui est pourvue d'une paroi de tubulure intérieure (111) et d'un rebord de butée annulaire (115) formé à l'intérieur de la tubulure de raccordement (103) en forme de manchon et comportant une face de butée (117) dirigée axialement ; et
un tube de matière synthétique (101) qui comporte une paroi de tube intérieure (105), une paroi de tube extérieure (107) et un côté de tube frontal (109), le côté de tube frontal (109) du tube de matière synthétique (101) venant en contact avec la face de butée (117) dirigée axialement, et la paroi de tube extérieure (107) du tube de matière synthétique (101) étant reliée à la paroi de tubulure intérieure (111) de la tubulure de raccordement (103) en forme de manchon au moyen d'une liaison par soudure par friction,
**caractérisé en ce qu'**une rainure circonférentielle (133) ou une poche (133) destinée à recevoir de la matière fondue à friction est ménagée entre le rebord de butée annulaire (115) et la paroi de tubulure intérieure (111) de la tubulure de raccordement (103) en forme de manchon.

2. Connecteur fluidique (100) selon la revendication 1, la tubulure de raccordement (103) en forme de manchon comportant une extrémité d'insertion (119) au niveau de laquelle le tube de matière synthétique (101) est inséré, et un évidement circonférentiel (135) ou un contour (135), en particulier une indentation ou un creux d'ondulation, étant formé dans la paroi de tubulure intérieure (111) de la tubulure de raccordement (103) en forme de manchon entre le rebord de butée annulaire (115) et l'extrémité d'insertion (119) pour recevoir la matière fondue à friction s'écoulant en inverse.

3. Connecteur fluidique (100) selon la revendication 2, une région de transition (139) étant formée dans la paroi de tubulure intérieure (111) de la tubulure de raccordement (103) en forme de manchon entre l'évidement circonférentiel (135) ou contour (135) et l'extrémité d'insertion (119).

4. Connecteur fluidique (100) selon la revendication 2 ou 3, une région de soudage (137) de la paroi de tubulure intérieure (111) étant formée dans la paroi de tubulure intérieure (111) entre le rebord de butée annulaire (115) et l'évidement circonférentiel (135) ou contour (135), la paroi de tube extérieure (107) du tube de matière synthétique (101) étant reliée à la région de soudage (137) de la paroi de tube intérieure (111) au moyen de la liaison de soudage par friction.

5. Connecteur fluidique (100) selon la revendication 4, la région de soudage (137) comportant une surface sans contour qui s'étend dans la direction longitudinale de la tubulure de raccordement (103) en forme de manchon ou la région de soudage (137) comportant une élévation.

6. Connecteur fluidique (100) selon l'une des revendications précédentes, la tubulure de raccordement (103) en forme de manchon comportant une extrémité d'insertion (119) au niveau de laquelle le tube de matière synthétique (101) est inséré et une déformation circonférentielle en forme d'onde pourvue d'une crête d'ondulation (141) et d'un creux d'ondulation étant formée dans la paroi de tubulure intérieure (111) de la tubulure de raccordement (103) en forme de manchon entre le rebord de butée annulaire (115) et l'extrémité d'insertion (119) pour recevoir la matière fondue à friction.

7. Connecteur fluidique (100) selon l'une des revendications précédentes, la paroi de tube intérieure (105) du tube de matière synthétique (101) formant une paroi intérieure du connecteur fluidique (100) qui s'étend de la face de butée (117) à une extrémité d'insertion (119) de la tubulure de raccordement (103) en forme de manchon.

8. Connecteur fluidique (100) selon l'une des revendications précédentes, la tubulure de raccordement (103) en forme de manchon comportant une autre paroi de tubulure intérieure (121) qui est formée entre le rebord de butée annulaire (115) et une région (123), opposée au tube de matière synthétique (101), de la tubulure de raccordement (103) en forme de manchon,
le rebord de butée annulaire (115) comportant une paroi de rebord intérieure (125) sur un côté dirigé vers l'intérieur de la tubulure de raccordement (103) en forme de manchon,
et l'autre paroi de tubulure intérieure (121) et la paroi de rebord intérieure (125) formant une autre paroi intérieure du connecteur fluidique (100) qui s'étend de la région (123), opposée au tube de matière synthétique (101), jusqu'au rebord de butée annulaire (115) de la tubulure de raccordement (103) en forme de manchon.

9. Connecteur fluidique (100) selon l'une des revendications précédentes, la tubulure de raccordement (103) en forme de manchon comportant une extrémité d'insertion arrondie (119).

10. Connecteur fluidique (100) selon l'une des revendications précédentes, la tubulure de raccordement (103) en forme de manchon ayant un diamètre intérieur se réduisant en direction du rebord de butée annulaire (115) .

11. Connecteur fluidique (100) selon l'une des revendications précédentes, la tubulure de raccordement (103) en forme de manchon comportant une extrémité d'insertion (119) au niveau de laquelle le tube de matière synthétique (101) est inséré, le connecteur fluidique (100) comprenant un corps de liaison (129) qui est inséré dans la tubulure de raccordement (103) en forme de manchon à une extrémité opposée au tube de matière synthétique (101).

12. Connecteur fluidique (100) selon la revendication 11, une saillie de tubulure (127) étant disposée au niveau d'une région (123), opposée au tube de matière synthétique (101), de la tubulure de raccordement (103) en forme de manchon, le corps de liaison (129) comportant une face de liaison frontale (131) qui vient en appui sur la saillie de tubulure (127).

13. Procédé (200) de réalisation d'une liaison par soudure par friction entre un tube de matière synthétique (101) et une tubulure de raccordement (103) en forme de manchon à l'intérieur d'un connecteur fluidique (100) selon l'une des revendications précédentes 1 à 12, le procédé (200) comprenant les étapes suivantes
insérer (201) le tube de matière synthétique (101) dans la tubulure de raccordement (103) en forme de manchon,
faire tourner (203) le tube de matière synthétique (101) dans la tubulure de raccordement (103) en forme de manchon pour former une matière fondue à friction, et
refroidir (205) le connecteur fluidique (100) pour produire la liaison de soudure à friction entre le tube de matière synthétique (101) et la tubulure de raccordement (103) en forme de manchon.

14. Procédé (200) selon la revendication 13, la rotation (203) du tube de matière synthétique (101) étant effectuée lors de l'insertion (201) du tube de matière synthétique (101) dans la tubulure de raccordement (103) en forme de manchon, ou la rotation (203) du tube de matière synthétique (101) étant effectuée après l'insertion (201) du tube de matière synthétique (101) dans la tubulure de raccordement (103) en forme de manchon.
